# EUROPEAN PATENT APPLICATION

(11) **EP 3 975 007 A1**
(43) Date of publication of application: **30.03.2022**
(21) Application number: 19955787.7
(22) Date of filing: 11.12.2019
(51) Int. Cl.: G06F 16/40

(54) **METHOD FOR HARMONIZING THE CONTENT OF FUNCTIONAL UNITS OF TRAINING COURSES**

(30) Priority: 10.12.2019 RU 2019140655
(71) Applicant: Public Joint Stock Company Aeroflot-Russian Airlines, Moscow, 119019 (RU)
(72) Inventor: KORENEVSKII, Aleksei Iurevich, Moscow, 125466 (RU); ZHURAVLEV, Roman Sergeevich, Moscow, 129081 (RU); NESTOIANOV, Aleksandr Aleksandrovich, Moscow, 125367 (RU); GRIGORENKO, Aleksei Igorevich, Mytishchi, 141002 (RU)
(74) Representative: Ingenias Creaciones Signos e Invenciones S.L.P.
(86) International application number: PCT/RU2019/000931
(87) International publication number: WO 2021/118389

(57) **Abstract**

The invention relates to a method for harmonizing the content of functional units of training courses. The method includes the steps of uploading, comparing, updating comparison results, processing fragments, and generating a content tree, an instructional course and an examination. The invention allows the automatic adjustment of training programme parameters.

## Description

### Field of invention

The invention relates to training and knowledge testing and may be used in auxiliary technical equipment in the professional spheres requiring continuous knowledge update including changes in regulatory documents directly used by personnel in their professional activities. The invention may be used, for instance, to ensure flight safety during training and retraining of flight personnel and support personnel. The invention may be used for the creation of training programs, update of existing programs, and for the creation of study guides and examination materials.

### State of the art

A method for advanced training of flight personnel is known, as described in Russian patent application 97101416 published on February 20, 1999, describing the utilization of a training model that considers the personal experience of the personnel being trained. The known method is not universal and may be used only for psychological correction of the personnel behavior, if required.

Russian patent 2158965 published on November 10, 2000 describes a method for the creation of a training program being the nearest equivalent to the proposed invention that uses computational analysis of a training program based on a matrix of concepts. A list of conventional knowledge units is compiled and recorded upon implementation of the known method, which include the concepts contained in the original training program; the significance of each concept in the list is assessed by linking it to other concepts, and then an updated list of concepts is compiled including the most significant concepts, and an optimal training program is created based on the updated list.

The known method is intended for the creation of a training program that is optimal in terms of mastering the taught material, and is not intended for quick modification of the contents of the training materials. The above circumstance is not a significant drawback in multiple applications of the known method, since the objective of most of the training programs is to provide basic knowledge and skills to the students as required for further independent work.

When the method is used for continuous improvement of knowledge and skills of the persons responsible for flight safety, impossibility of quick automatic update of training programs becomes a significant drawback.

The proposed invention allows overcoming at least some of the drawbacks of the prior art and utilizing the advantages specified in the description.

The objective of the proposed method is to eliminate the drawbacks of the methods known from the prior art while achieving a technical result implying higher flight safety and lower time and effort required for the update of training, certification and examination programs, addressing modifications in regulatory documents and promptly addressing both positive and negative work experience of the personnel who are responsible for flight safety. The invention allows automatically modifying the parameters of training programs without significant participation of personnel, which significantly reduces the financial expenditures on creation and support of workplaces, and reduces the computing efforts for tracing and introduction of changes.

### Summary of the invention

To achieve the aforementioned technical results, a method for harmonizing the content of functional units of training courses is proposed, wherein: each of the individual functional units is split into fragments with individual and complete meaning with assignment of a unique identification attribute to each fragment; fragments with similar meaning are identified, and the first groups of identification attributes with similar meaning are created; fragments with related forms of presentation are identified, and the second groups of fragment identification attributes with related forms of presentation are created; when a request for modification of the main modifiable fragment is received, the identification attribute of the first modifiable fragment is determined, the main substituting fragment is created by introduction of the requested changes into the main modifiable fragment with assignment of a unique identification attribute to the substituting fragment; the main substituting fragment is classified into one of the first groups of identification attributes and into one of the second groups of identification attributes, the source fragments with the identification attributes of the second group to which the identification attribute of the main modifiable fragment belongs are identified, such source fragments require modification of the narrative form according to the narrative form and content of the main substituting fragment, and the identified fragments of the second group are replaced with the substituting fragments, with assignment of a unique identification attribute to each substituting fragment of the second group, the identification attributes of modified fragments are excluded from the first and the second groups of fragments; the source fragments with the identification attributes of the first group, to which the identification attribute of the main modifiable fragment belongs, are replaced with substituting fragments of the first group modified according to the contents of the substituting fragment with assignment of unique identification attributes to the substituting fragments of the first group, the identification attributes of the modified fragments are excluded from the first groups of fragments; and for substituting fragments: fragments with similar meaning are identified with inclusion of the identification attributes of the substituting fragments into the corresponding first groups of the identification attributes of fragments with similar meaning; and the fragments with related forms of presentation are identified, with inclusion of the identification attributes of the substituting fragments into the corresponding second groups of identification attributes of fragments with related forms of presentation.

In a particular embodiment, a collection of regulatory documents with a similar meaning to the fragments is additionally assigned; upon a revision of a regulatory document, the main source fragment of the training courses that requires modification is determined, and a request for modification of the main source fragment of the training courses requiring modification is formulated.

In a particular embodiment, the main source fragment of the training courses may be represented by at least the details or a quote from a regulatory document used in the functional unit that describes the sources of information used for the preparation of the training courses.

The training program in this description involves a set of training, curricular and testing materials defining the contents, scope and procedure of learning and teaching of a subject or a section thereof.

### Brief description of drawings

FIG. 1 shows a flowchart of an exemplary embodiment of an automated process of uploading a document into a library;
FIG. 2 shows a flowchart of an exemplary embodiment of an automated process of uploading a new document version;
FIG. 3 shows a flowchart of an exemplary embodiment of an automated process of comparison of document versions and processing of the comparison results;
FIG. 4 shows a flowchart of an exemplary embodiment of an automated process of updating the comparison results (blocking/unblocking of questions and training materials);
FIG. 5 shows a flowchart of an exemplary embodiment of an automated process of creating a content tree;
FIG. 6 shows a flowchart of an exemplary embodiment of an automated process of creating a training course;
FIG. 7 shows an exemplary flowchart of an automated process of creating an exam;
FIG. 8 shows an exemplary flowchart of an automated process of updating training/examination content;
FIG. 9 shows an exemplary flowchart of an automated process of processing blocked questions;
FIG. 10 shows a flowchart of an exemplary embodiment of an automated process of automated subsystem (bot) functioning - publishing of updates of training materials and questions with subsequent creation and publication of a newsfeed on the content update;
FIG. 11 shows a simplified example of hardware implementation of the proposed invention;
FIG. 12 shows an example of a computer system suitable for implementation of the elements of proposed invention;
FIG. 13 shows a flowchart of an exemplary embodiment of the present invention.

### Description of embodiments

The subject matters and aspects of the present invention, and methods for achieving these subject matters and aspects, will become apparent by means of references to exemplary embodiments. However, the present invention is not limited to the exemplary embodiments disclosed below and may have other different embodiments. The essence of the description is nothing other than particular details provided to assist persons skilled in the art in getting an exhaustive understanding of the invention, and the present invention is defined only in the scope of the appended claims.

The terms "module", "component", "element", "part", "block", "constituent part" and the like used herein to define computer entities may refer to hardware, e.g. a device or part of a device, in particular, including at least one processor, microcontroller, etc., or software, e.g. a computer program, firmware or some other set of a sequence of control commands enabling the hardware of a computing system to perform calculations or control functions being a combination of commands and data.

The described invention may be used for vocational training and knowledge testing of the flight personnel of an airline, vocational training of specialists in any other disciplines in areas where receiving and applying dynamically changing information (content) is an important part of the activities that significantly affect work safety.

The electronically created content of training materials and examination questions for an automated information system of vocational training for flight personnel has a multilevel structure. The structure of educational and examination content may include four levels of different scale. The lowest (first) level of the digital content of training materials/examination questions represents original development of training materials which comprise the contents of individual topics intended for vocational training and examination of the flight personnel of an airline. Original training materials include different forms of information presentation: digital texts written by training course developers, fragments of textbooks, diagrams, pictures, tables, presentations, videos, references to flight regulations. A set of examination questions in a digital format has been developed to check the quality of knowledge obtained by the pilots. In order to expedite the process of pilot training or exams that must be passed for annual confirmation of pilot qualification, each examination question is linked to a particular training material through an electronic link. This significantly reduces the time required to search for necessary pages in textbooks, required video materials or quotes from flight regulations during preparation for an exam. A pilot gets an opportunity to quickly refresh only (or at least) the training materials required to pass the exam and to confirm pilot qualification using the provided references. A higher (second) level of digital content is combining individual topics into the content of different subjects. A set of subjects is also an original authored set created for a particular airline. The third level of digital content is the creation of an original "tree" of a training course based on a set of subjects, which is used for training and passing of exams by pilots of an airline. The set of subjects forms the "tree" trunk, and the training materials and associated questions are located in the "tree" nodes.

The highest (fourth) level represents a combined "tree" of courses covering the whole required training and examination content that a pilot must know to confirm the pilot qualification. Such a constructed "tree" of courses meets the main requirements for vocational training of flight personnel as detailed in Federal Aviation Regulations (FAR).

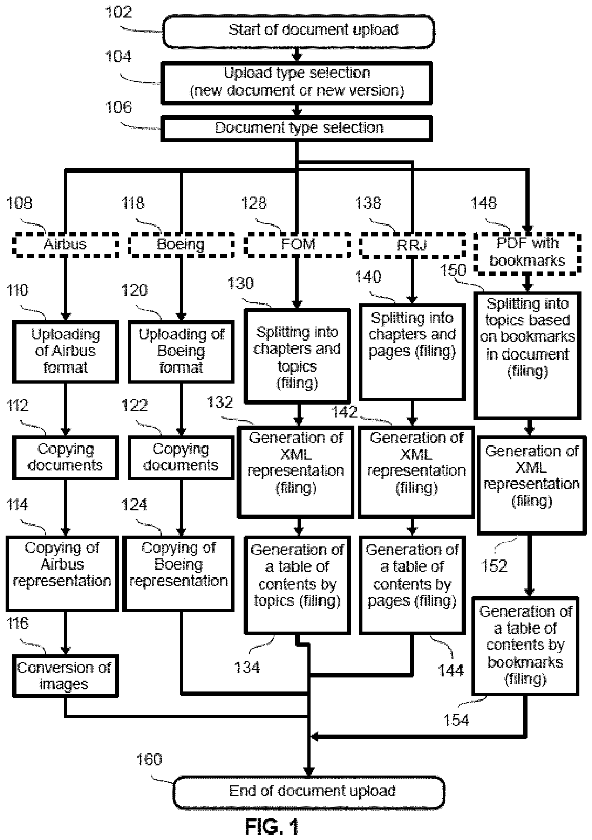

FIG. 1 - FIG. 4 show flowcharts of exemplary embodiments of automated processes associated with the creation of a library of documents.

The first group of automated processes shown in FIG. 1 - FIG. 4 is related to the creation of a library of documents, the content of which may change over time. The content of each of the documents may be structured and converted to the XML format. The documents are grouped by classifiers, and established document classes are linked to nodes of the table of contents of the document library. When a new or modified version of the document appears, the new document version is uploaded into the same node of the table of contents. A comparison is performed for the old and new versions of the document, and a comparison report is created containing a list of DUs (document units) that distinguish the new version from the old one.

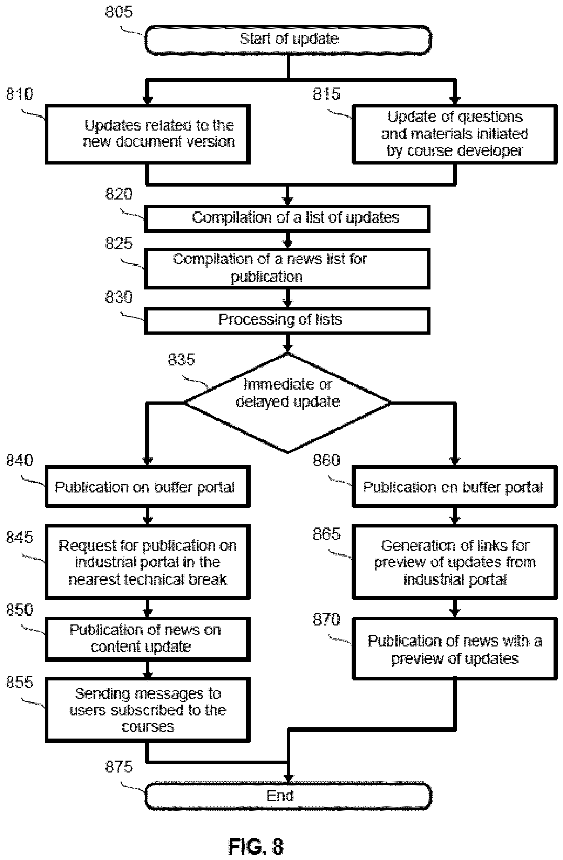

The differences found during the comparison can be marked depending on their nature. For example, when color marking is used, "deleted" is marked blue, "added" is marked green, "modified" is marked red. Training materials and examination questions marked as "deleted" are marked as conditionally blocked and may not be used further. Thus, for example, such training materials and examination questions can not be used during exams taken by the students. More particularly, the materials may be used after their revision, including after substitution of fragments, as described in this description. For other materials, the references used in the documents are replaced by the references related to the new or current versions of the documents where the substitution was made, at least in the fragments, in order to update the new information, for example, if an outdated document version can be useful in terms of the logic of the training process structure. Verified and approved training materials and questions can be used at least in the training process or in the advanced training of personnel. The aforementioned materials can be published on the learning portal, wherein the publication can be performed immediately or delayed for a specified time period, for example, as shown in FIG. 8. A fixed time can also be set for such publications.

Thus, FIG. 1 shows a flowchart of an exemplary embodiment of an automated process of uploading a document into a library ("Uploading a document into a library").

At step 102, the document uploading process begins.

At step 104, document uploading is selected, in particular, uploading of a new document or uploading of a new version is selected.

At step 106, the document type is selected.

If PDF document type with bookmarks (148) is selected at step 106, then splitting into topics is performed at step 150 depending on the bookmarks in the document (filing). Next, at step 152, an XML representation is created (filing), and next, at step 154, a table of contents is generated based on the bookmarks (filing), and the document uploading process ends at step 160.

If RRJ document type (138) is selected at step 106, then, at step 140, the document is broken down into chapters and pages (filing). Next, at step 142, an XML representation is created (filing), and next, at step 144, a table of contents is generated based on the pages (filing), and the document uploading process ends at step 160.

If FOM document type (128) is selected at step 106, then, at step 130, the document is broken down into chapters and topics (filing), and next, at step 132, an XML representation is created (filing). Next, at step 134, a table of contents is generated by topics (filing), and the document uploading process ends at step 160.

If Boeing document type (118) is selected at step 106, then the Boeing format is uploaded at step 120. Next, at step 122, the documents are copied. Next, at step 123, the Boeing representation is copied and the document uploading process ends at step 160.

If Airbus document type (108) is selected at step 106, then the Airbus format is uploaded at step 110. Next, at step 112, the documents are copied. Next, at step 114, the Airbus representation is copied, after which, at step 116, the images are converted, and the document uploading process ends at step 160.

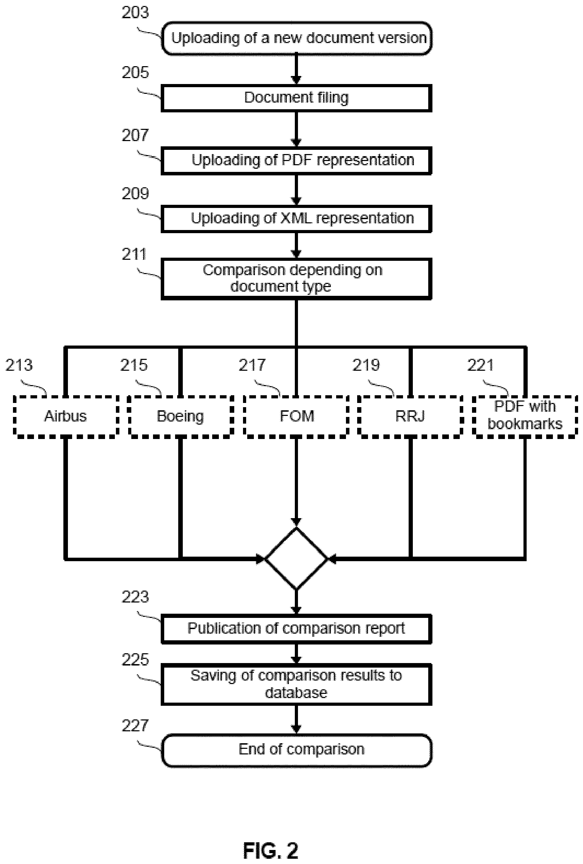

FIG. 2 shows a flowchart of an exemplary embodiment of an automated process of uploading a new document version ("Uploading a new document version").

Uploading a new document version starts at step 203, and next, the document is filed at step 205.

Next, at step 207, the PDF representation is uploaded, and then, at step 209, the XML representation is uploaded.

Step 211 includes a comparison that depends on the document type, in particular, an aircraft model to which the document refers can be selected, e.g., Airbus (213), Boeing (215), FOM (217), RRJ (219), or a document type, e.g. PDF with bookmarks (221). For a document with bookmarks, a type can be defined for each bookmark, for example, aircraft model.

At step 223, the comparison report is published, and next, at step 225, the comparison results are saved to the database.

The comparison ends at step 227.

The aforementioned comparison results and other data, including the documents, substituting fragments, i.e. the fragments requiring an update with new information, etc. can be stored in a physical data storage, logically arranged and ordered in the database (DB).

The aforementioned storage can be a temporary data storage, e.g. random access memory (RAM), read-only memory, e.g. (programmable) read-only memory (ROM/PROM), including that represented by at least one chip or a set of chips, etc. In a particular embodiment, the aforementioned data storage is a device for storage of information/data and can be represented by at least one hard (magnetic) disk drive (HDD), solid-state drive (SSD), solid-state hybrid drive (SSHD), Storage Area Network (SAN), Network Attached Storage (NAS), and/or any other device or multiple devices enabling at least recording to and reading from the device, and/or data storage on the device. Data in the storage can be stored in any known data format, for example, in the form of at least one table or a set of related or unrelated database tables.

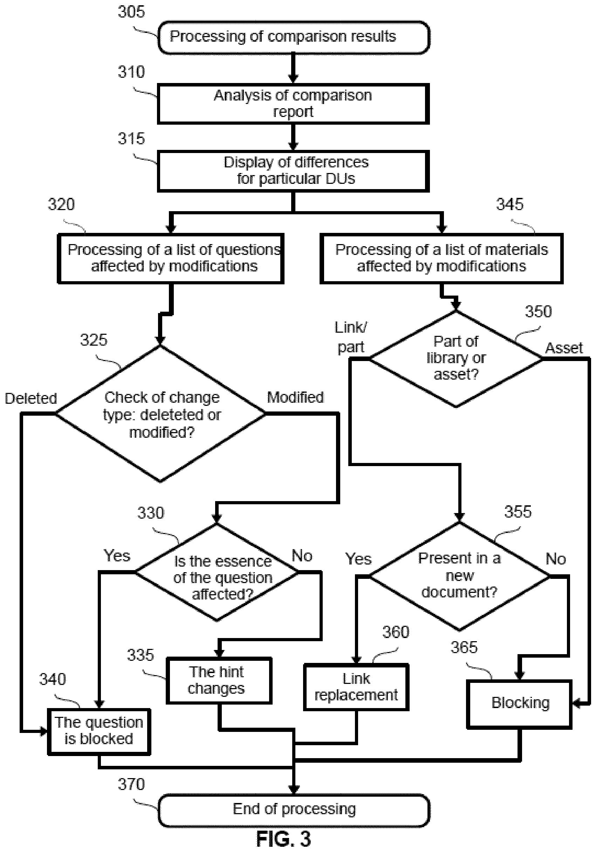

FIG. 3 shows a flowchart of an exemplary embodiment of an automated process of comparison of document versions and processing of the comparison results ("Comparison of document versions and processing of the comparison results").

At step 305, processing of the comparison results starts.

At step 310, the previously created report on the comparison results is analyzed.

At step 315, the differences of particular DUs are displayed.

At step 320, the list of questions affected by the modifications is processed.

Next, at step 325, the modification type is checked, i.e. whether the change is related to modification or deletion.

If it is found at step 325 that a modification was performed, then step 330 checks whether the essence of the question is affected.

If it is found at step 330 that the essence of the question is not affected, then the hint changes at step 335, and the processing ends at step 370.

If it is found at step 330 that the essence of the question is affected, then the question is blocked at step 340, and the processing ends at step 370.

If it is found at step 325 that the change is related to deletion, then, at step 340, the question effective earlier (or other meaningful part of the document) is blocked, and the processing ends at step 370.

At step 345, the list of materials affected by the modifications is processed.

Next, at step 350, each of the materials affected by the changes is checked. If the changes are related to references or parts of the library representing the document, and the changes can be introduced into a new document, and are present in a new document, then step 360 is performed. If it is found at step 350 that the changes are related to the whole document, i.e. are an asset, or if it is found at step 355 that the changes have not been introduced into a new document, then the document is blocked at step 365, and the document is excluded from the training program, and the processing ends at step 370. Otherwise, if it is found at step 350 that the changes are related to references or parts of the library ("reference/part of library"), then presence in a new document is checked. If the presence in a new document is confirmed at step 355, then the reference is replaced at step 360, and the processing ends at step 370.

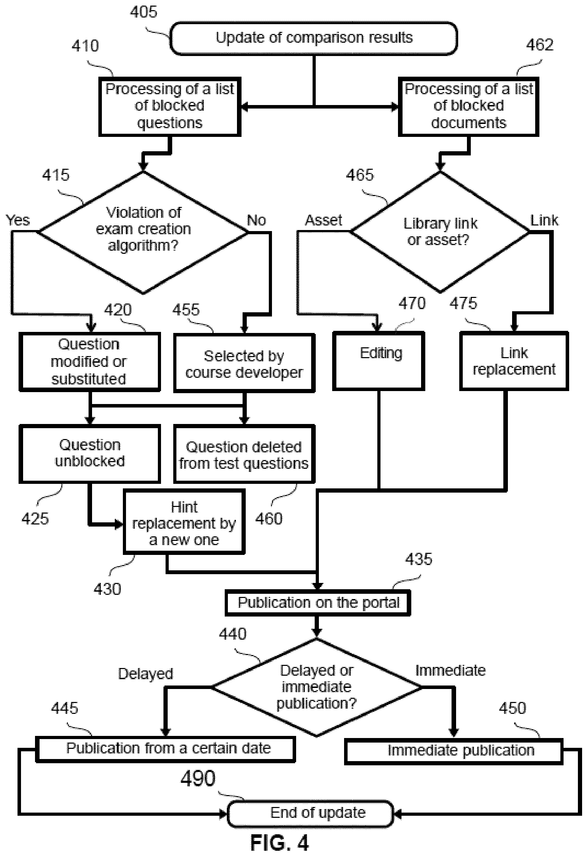

FIG. 4 shows a flowchart of an exemplary embodiment of an automated process of updating the comparison results according to the method disclosed in FIG. 3. FIG. 4 shows the process of processing documents, including the contents of documents with modification (revision) of contents that includes at least the replacement of the content fragments and information related to such contents (and documents). The aforementioned fragments, in particular, the substituted fragments, i.e. fragments requiring update of new information, are replaced by substituting fragments, i.e. fragments with updated information, wherein such fragments may be the results of comparison, including at least one part of the comparison results.

The comparison results update process starts at step 405. The aforementioned update process is a process of replacing some fragments (those being substituted) with other (substituting) fragments.

At step 410, the list of blocked questions is processed, after which, at step 415, violations of the exam creation algorithm are identified, if any. Violations of the exam creation algorithm may include insufficient number of questions, absence of questions that are key questions for a training course, or absence of the required number of questions in the examination cards.

If no violation of the exam creation algorithm is found at step 415, then, at step 455, it is determined (e.g. by a training course developer and/or using the described system) whether to unblock the question or to delete the question from the test, and, depending on the decision of the training course developer, the process proceeds to step 425 if the training course developer has decided to unblock the question, or to step 460 if the training course developer has decided to exclude the question from the test, after which the process proceeds to step 430.

If a violation of the exam creation algorithm is identified at step 415, then, at step 420, the question is modified or replaced. Next, the update process proceeds to step 425, where the question is unblocked in case of request modification, or to step 460, where, in case of the question replacement, the question is excluded from the test, and then the update process proceeds to step 430.

At step 430, the hint is replaced with a new one, after which the process proceeds to publication on the portal 435.

Next, step 440 checks whether there is a need for immediate or delayed publication.

If it is found at step 440 that immediate publication is required, then immediate publication is performed at step 450, and the update process ends at step 490.

If it is found at step 440 that immediate publication is not required, but a delayed publication is required, then a publication is performed from a certain date at step 445, and the update process ends at step 490.

Processing of a list of blocked documents starts at step 462, and next, at step 465, a verification is performed whether the substitution is performed only by replacing a reference or the substitution relates to the essence of the document, i.e. is an asset. If the substitution involves the replacement of a reference (if "reference"), then the reference is replaced at step 475, and the update process proceeds to step 435. Otherwise, if the substitution is related to the document essence (is an "asset"), then editing is performed at step 470, and the update process proceeds to step 435.

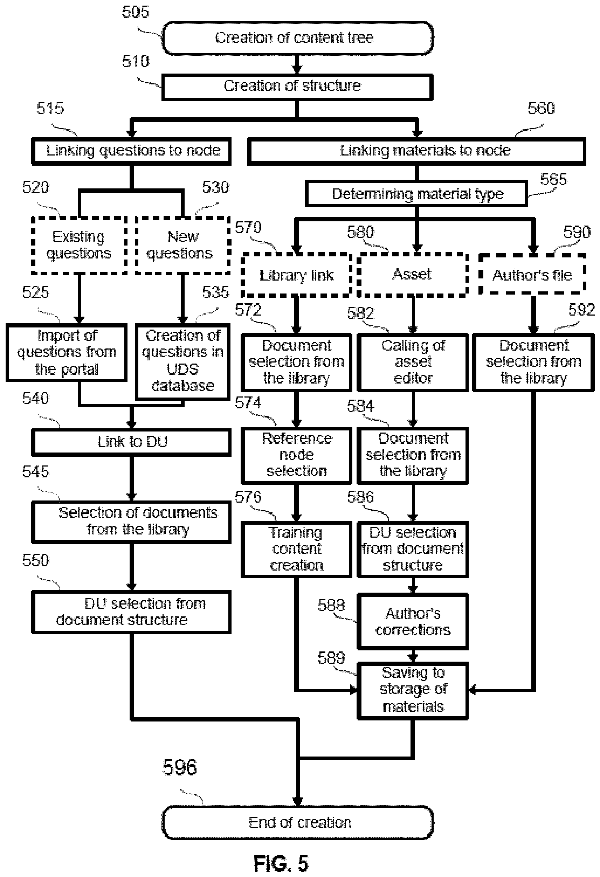

FIG. 5 - FIG. 7 show flowcharts of exemplary embodiments of automated processes associated with the creation of a content tree.

The second group of automated processes shown in FIG. 5 - FIG. 7 is related to the creation of a content tree: the tree structure is created reflecting the content of the training courses, the main content of the tree is generated in its terminal nodes, and a set of questions and a set of training materials (both standardized in the form of complete documents, and non-standard, i.e. created by the author in the form of assets) are linked to each terminal node; a number of functions are available for the creation of the tree structure (adding a new node, replacing the node name, node deletion, moving the node through the tree structure); exam questions are linked to each tree node through DUs of the documents present in the library; there is a function for viewing the questions linked to the tree node; a function of creating a new training course and a new exam is available, which are collected on an individual (buffer) portal.

FIG. 5 shows a flowchart of an exemplary embodiment of an automated process of creating a content tree ("Creating a content tree");

The process of creating a content tree starts at step 505.

The structure is created at step 510.

The materials are linked to node 560 at step 560.

Next, at step 565, the material type is defined.

If, at step 565, the type of material was found to be an author's file (590), then, at step 592, the document will be selected from the library. Next, at step 589, the materials are saved to storage, and the tree creation process ends at step 596.

If it is found at step 565 that the material is of the asset type (580), then an asset editor is called at step 582, after which, at step 584, the document is selected from the library. Next, at step 586, DUs are selected from the document structure. At step 588, the author's corrections are introduced, and, at step 589, the result is saved in storage, and, at step 596, the creation of a content tree is completed.

If it is found at step 565 that the type of material is a library reference (570), then the process of tree creation proceeds to step 572.

The document is selected from the library at step 572, after which a reference node is selected at step 574, and then the training content is generated at step 576.

Next, at step 589, the materials are saved to storage, and the tree creation process ends at step 596.

The questions are linked to the node at step 515.

New questions (530) are created in the Unified Data Storage (UDS) database at step 535.

Next, the content tree creation process proceeds to step 540.

For the existing questions (520), questions are imported from the portal at step 525, and the content tree creation process proceeds to step 540.

A link with the DUs is established at step 540, and next, at step 545, the DUs are selected from the document structure.

The content tree creation process ends at step 596.

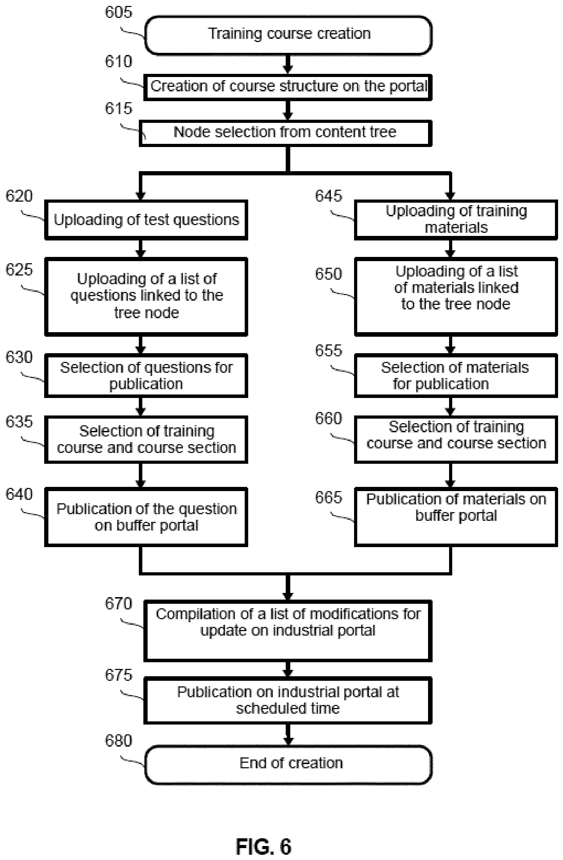

FIG. 6 shows a flowchart of an exemplary embodiment of an automated process of creating a training course ("Creating a training course").

The training course creation process starts at step 605.

The course structure is created on the portal at step 610, after which, at step 615, a node is selected from the content tree.

The training materials are uploaded at step 645, and a list of materials linked to the tree node is uploaded at step 650.

Next, the materials for publication are selected at step 655, and a course and course section are selected at step 660.

Next, the materials are published on the buffer portal at step 665.

Next, a list of modifications for update (new data, information) is compiled at step 670, with replacement of fragments on the industrial portal, and publication on the industrial portal is performed at step 675 at a scheduled time, and next, at step 680, the training course creation process ends.

The test questions are uploaded at step 620, and a list of questions linked to the tree node is uploaded at step 625.

The questions for publication are selected at step 630, and next the course and course section are selected at step 635.

Next, at step 640, the question is published on the buffer portal, and the training course creation process proceeds to step 670.

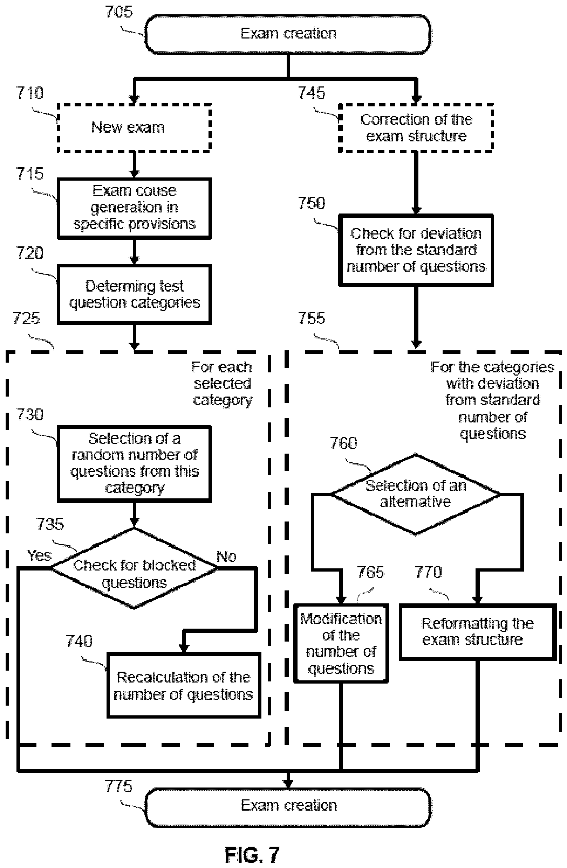

FIG. 7 shows an exemplary flowchart of an automated process of creating an exam.

The process of exam creation starts at step 705.

If a new exam (710) is created, an examination course is created in the specific provisions of a training course at step 715.

Next, test question categories are defined at step 720.

Next, a random number of questions from the category are selected for each of the selected categories (725) at step 730, and the blocked questions are checked at step 735, wherein, if blocked questions are absent, the number of questions is redefined at step 740, and after that, creation of an exam is considered completed (not reflected in the flowchart), otherwise, if blocked questions exist, the process ends at step 775.

At step 775, if the exam structure (745) has been corrected, violations of the standard number of questions are checked.

Next, for the categories with a violation of the standard number of questions, an alternative is selected at step 760 - whether the number of questions needs to be changed or the structure of the exam needs to be reformatted. If it is found at step 760 that the exam structure needs reformatting, then the exam structure is reformatted at step 770 and the process ends at step 775. If it is found at step 760 that the number of questions needs to be changed, then the number of questions is changed at step 765, after which the process ends at step 775.

FIG. 8 - FIG. 10 show flowcharts of exemplary embodiments of the automated processes related to an update of dynamic educational/examination content.

The third group of automated processes shown in FIG. 8 - FIG. 10 is related to an update of dynamic educational / examination content: a table of updates is generated including two types of updates (of questions and of training materials), a list of required updates of the original source is compiled in the dashboard program; if potentially blocked questions exist, the possibility of creating an exam is checked (to this end, all blocked questions are collected into a separate category titled "blocked questions", and a training course developer can edit them or re-link the questions to maintain the standard number of questions for the exam), a news item containing information on the document being updated is automatically generated and, in a particular embodiment, fragments that were replaced (or requiring replacement but not replaced), and on the document version, publication of the update on an industrial portal is performed by a bot launched during the nearest technical break (at a specified time), the information on the modifications in the documents is published in the newsfeed with a possibility of detailed viewing of all proposed replacements in a preview mode, and notifications are sent to the users.

FIG. 8 shows an exemplary flowchart of an automated process of an update of the training/examination content ("Update of the training/examination content").

The update process starts at step 805.

The data associated with the document version is updated at step 810.

The questions and materials are updated at the training course developer's initiative at step 815.

Next, a list of updates is compiled at step 820, after which at least one list of news for publication is compiled at step 825, and the lists get processed at step 830.

The need for immediate or delayed update is checked at step 835 depending on the importance of the updates. For example, the updates (in particular those containing important data/information) created based on the results of an analysis of emergency situations require an immediate update (in particular, by replacement of the substituted fragments requiring an update with new information by substituting fragments containing the updated information), while other updates may be introduced as required upon processing of the documents.

If an immediate update is required (and/or if a delayed update is impossible) publication on the buffer portal is performed at step 860.

Next, at step 865, links are generated for a preview of the updates from the industrial portal, after which, at step 870, the news is published with a preview of the updates, and the update process ends at step 875.

If a delayed update is possible (or required), publication on the buffer portal is performed at step 840.

Next, at step 845, a request for publication on the industrial portal during the nearest technical break is generated at step 845, after which the news on the content update is published at step 850.

Next, at step 855, messages are sent to the users subscribed to the courses, and the update process ends at step 875.

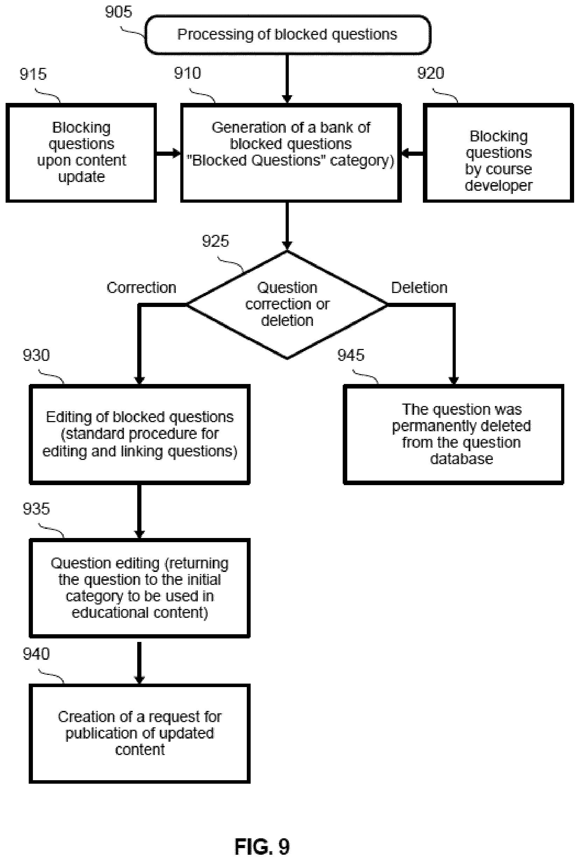

FIG. 9 shows an exemplary flowchart of an automated process of processing blocked questions ("Processing blocked questions").

The process of processing blocked questions starts at step 905 and a bank of blocked questions ("blocked questions" category) is generated at step 910 by blocking of questions upon a content update at step 915 and upon blocking of questions by a training course developer at step 920.

Next, at step 925, a check for correction or deletion of a question is performed, and in case of correction, blocked questions are edited at step 930 (standard question editing and linking procedure), after which, at step 935, the question is edited (the question returns to the initial category for use in educational content). Next, at step 940, a request to publish the updated content is generated. Otherwise, in case of deletion, the question is permanently deleted from the database of questions at step 945.

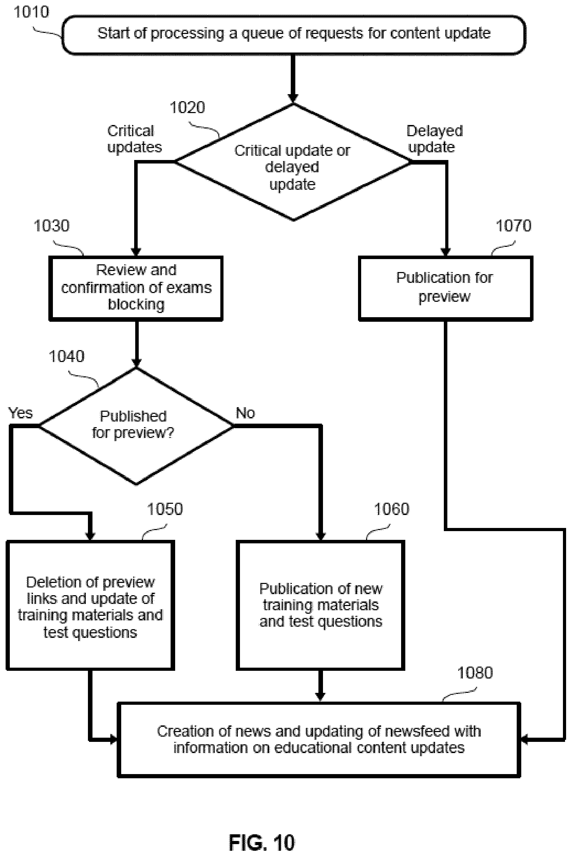

FIG. 10 shows a flowchart of an exemplary embodiment of an automated process of automated subsystem (bot) functioning - publishing of the updates of training materials and questions with further creation and publication of a newsfeed on the content update.

Processing a queue of requests for a content update starts at step 1010, and a check for critical updates and a delayed update are performed at step 1020.

In case of a delayed update, a publication for preview is performed at step 1070, after which, at step 1080, news is generated, and the newsfeed is updated with information on the educational content update.

If critical updates are present, blocked exams are checked and confirmed at step 1030, after which the fact of publication for preview is checked at step 1040. If a preview has not been published, then the updates of the training materials and test questions are published at step 1060, after which the news is generated, and the newsfeed is updated with information on the educational content update at step 1080. Otherwise, if a preview has been published, then the preview links are deleted at step 1050, and the training materials and test questions are updated (in particular, with a change of fragments), after which news is generated and the newsfeed is updated with information on the educational content update at step 1080.

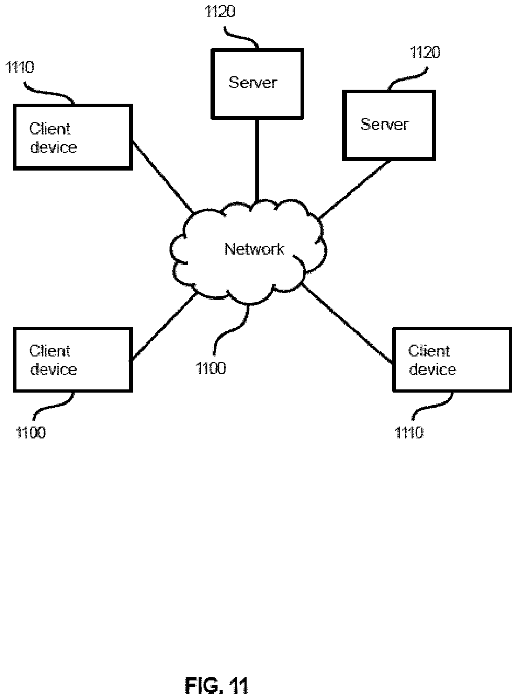

FIG. 11 shows a simplified example of a hardware embodiment of the proposed invention. A computer network may represent a geographically distributed collection of nodes connected by communication lines and segments for data transmission between terminal nodes such as personal computers, workstations or peripheral devices such as printers or scanners. Many types of networks can be used, from local (LAN) to wide (WAN) area networks. As shown in Fig. 11, an exemplary computer network 1100 may contain multiple network devices, such as routers, switches, computers, etc. interconnected by communication lines. For example, many network devices can be connected by one or several end-user devices (client devices) 1110, which may be used by the user, such as personal computers, smartphones, tablet PCs, etc. The communication channels connecting different network devices can be wirelines or common environments (e.g. wireless lines), where certain devices may maintain communication with other devices based on the distance, signal level, current operating status, location, etc. The communication channels may connect different network devices in any possible configuration. One or several servers 1120 (e.g. host servers, web servers, databases, etc.) may maintain communication with network 1100 and, thus, with a plurality of client devices 1110. It will be clear for persons skilled in the art that any amount and layout of nodes, devices, communication lines, etc. can be used in a computer network, and the illustration shown in FIG. 11 is a simplified example of the hardware embodiment of the system.

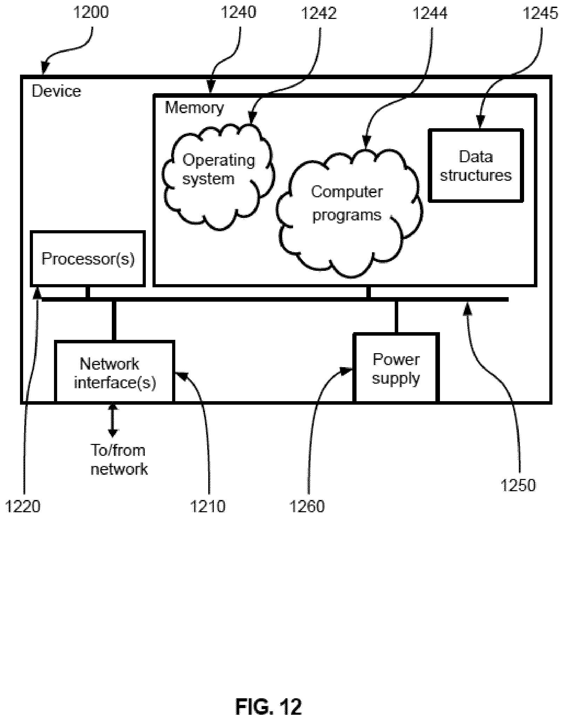

FIG. 12 shows an example of a computer system suitable for the embodiment of the elements of proposed invention. As shown in Fig. 12, the computer system contains a computing device 1200 that can be used as an end-user device or a server, the memory 1240 of which stores operating system 1242, computer programs 1244 and data structures 1245. Memory 1240 of device 1200 is linked, via bus 1250, with power supply 1260, at least one processor 1220 and at least one networking device 1210 transmitting data to network 1100 (FIG. 11) and from network 1100 (FIG.11).

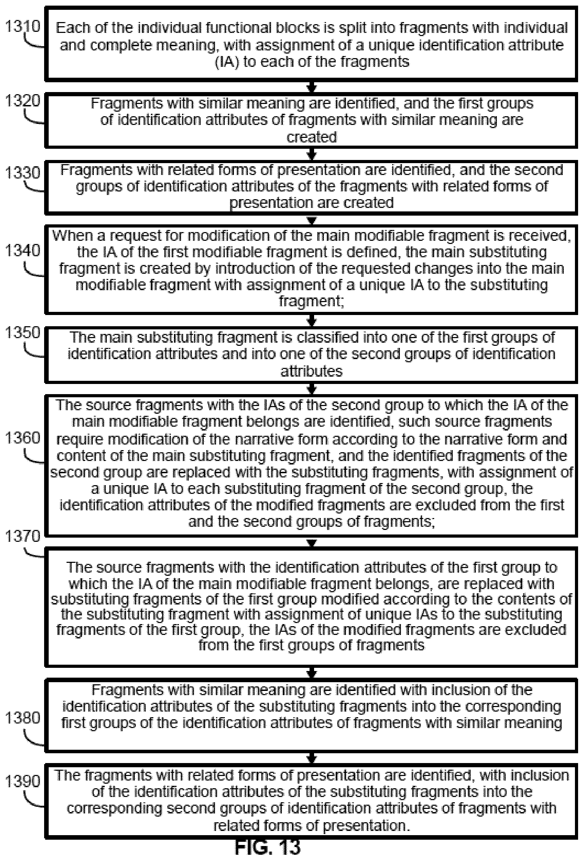

FIG. 13 shows a flowchart of an exemplary embodiment of the method of the present invention according to the independent claim.

At step 1310, each of the individual functional units is split (in particular, by the described system) into fragments with an individual and complete meaning, with assignment of a unique identification attribute (IA) to each fragment.

At step 1320, the fragments with similar meaning are identified, and the first groups of identification attributes with a similar meaning are created.

At step 1330, fragments with related forms of presentation are identified, and the second groups of identification attributes of the fragments with the related forms of presentation are created.

At step 1340, when a request for modification of the main modifiable fragment is received, the identification attribute of the first modifiable fragment is defined, the main substituting fragment is created by introduction of the requested changes into the main modifiable fragment with assignment of a unique identification attribute to the substituting fragment.

At step 1350, the main substituting fragment is classified into one of the first groups of identification attributes and into one of the second groups of identification attributes.

At step 1360, the source fragments with the identification attributes of the second group to which the identification attribute of the main modifiable fragment belongs are identified, such source fragments require modification of the narrative form according to the narrative form and content of the main substituting fragment, and the identified fragments of the second group are replaced with the substituting fragments, with assignment of a unique identification attribute to each substituting fragment of the second group, the identification attributes of the modified fragments are excluded from the first and the second groups of fragments.

In a particular embodiment, the main source fragment of training courses may be represented by at least the details or a quote from a regulatory document used in the functional unit that describes the sources of information used for the preparation of the training courses.

In a particular embodiment, a collection of regulatory documents with a similar meaning to the fragments is additionally assigned; upon a revision of a regulatory document, the main source fragment of the training courses that requires modification is determined, and a request for modification of the main source fragment of the training courses requiring modification is formulated.

At step 1370, the source fragments with identification attributes of the first group to which the identification attribute of the main modifiable fragment belongs, are replaced with substituting fragments of the first group modified according to the contents of the substituting fragment with assignment of unique identification attributes to the substituting fragments of the first group, the identification attributes of the modified fragments are excluded from the first groups of fragments.

At step 1380, for substituting fragments: fragments with similar meaning are identified with inclusion of the identification attributes of the substituting fragments into the corresponding first groups of the identification attributes of the fragments with similar meaning.

At step 1390, for substituting fragments: the fragments with related forms of presentation are identified, with inclusion of the identification attributes of the substituting fragments into the corresponding second groups of identification attributes of the fragments with related forms of presentation.

In conclusion, the information contained in the description is based on the examples that do not limit the scope of the present invention as defined in the claims. It will be clear to persons skilled in the art that other embodiments of the present invention may exist consistent with the essence and the scope of the present invention.

## Claims

1. A method for harmonizing the content of functional units of training courses, wherein:
each of the individual functional units is split into fragments with individual and complete meaning with assignment of a unique identification attribute to each of the fragments;
fragments with similar meaning are identified, and the first groups of identification attributes of fragments with similar meaning are created;
fragments with related forms of presentation are identified, and the second groups of identification attributes of the fragments with related forms of presentation are created;
when a request for modification of the main modifiable fragment is received, the identification attribute of the first modifiable fragment is defined, the main substituting fragment is created by introduction of the requested changes into the main modifiable fragment with assignment of a unique identification attribute to the substituting fragment;
the main substituting fragment is classified into one of the first groups of identification attributes and into one of the second groups of identification attributes,
the source fragments with the identification attributes of the second group to which the identification attribute of the main modifiable fragment belongs are identified, such source fragments require modification of the narrative form according to the narrative form and
content of the main substituting fragment, and the identified fragments of the second group are replaced with the substituting fragments, with assignment of a unique identification attribute to each substituting fragment of the second group, the identification attributes of the modified fragments are excluded from the first and the second groups of fragments;
the source fragments with identification attributes of the first group to which the identification attribute of the main modifiable fragment belongs, are replaced with substituting fragments of the first group modified according to the contents of the substituting fragment with assignment of unique identification attributes to the substituting fragments of the first group,
the identification attributes of the modified fragments are excluded from the first groups of fragments; and
for substituting fragments:
fragments with similar meaning are identified with inclusion of the identification attributes of the substituting fragments into the corresponding first groups of the identification attributes of fragments with similar meaning; and
the fragments with related forms of presentation are identified, with inclusion of the identification attributes of the substituting fragments into the corresponding second groups of identification attributes of fragments with related forms of presentation.

2. A method of Claim 1, wherein a collection of regulatory documents with a similar meaning to the fragments is additionally assigned; upon a revision of a regulatory document, the main source fragment of the training courses that requires modification is determined, and a request for modification of the main source fragment of the training courses requiring modification is formulated.

3. A method of Claim 2, wherein the main source fragment of the training courses may be represented by at least the details or a quote from a regulatory document used in the functional unit that describes the sources of information used for the preparation of the training courses.
